# FASCICULE DE BREVET EUROPEEN

(11) **EP 2 373 486 B1**
(45) Date de publication et mention de la délivrance du brevet: **11.01.2017**
(21) Numéro de dépôt: 09763870.4
(22) Date de dépôt: 30.11.2009
(51) Int. Cl.: B32B 25/08, B60C 1/00

(54) **STRATIFIE MULTICOUCHE ETANCHE A L'AIR POUR OBJET PNEUMATIQUE**
UNDURCHLÄSSIGES MEHRSCHICHTIGES LAMINAT FÜR EINEN PNEUMATISCHEN ARTIKEL
AIR-IMPERMEABLE MULTILAYER LAMINATE FOR PNEUMATIC ARTICLE

(30) Priorité: 03.12.2008 FR 0858243
(43) Date de publication de la demande: 12.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LESAGE, Pierre, 63000 Clermont-Ferrand (FR); ABAD, Vincent, 63400 Chamalières (FR); CUSTODERO, Emmanuel, 63400 Chamalières (FR)
(74) Mandataire: Sidhu, Alban
(86) Numéro de dépôt international: PCT/EP2009/008503
(87) Numéro de publication internationale: WO 2010/063427

(56) Documents cités:
- EP-A- 1 561 783
- EP-A- 1 987 962
- WO-A-2008/154996
- FR-A- 2 910 478
- US-A1- 2006 229 402

## Description

La présente invention est relative aux objets "pneumatiques", c'est-à-dire, par définition, aux objets qui prennent leur forme utilisable quand on les gonfle d'air ou d'un gaz de gonflage équivalent.

Elle se rapporte plus particulièrement aux couches ou stratifiés étanches aux gaz assurant l'étanchéité de ces objets pneumatiques, en particulier celle des bandages pneumatiques.

Dans un bandage pneumatique conventionnel du type "tubeless" (c'est-à-dire sans chambre à air), la face radialement interne comporte une couche étanche à l'air (ou plus généralement à tout gaz de gonflage) qui permet le gonflement et le maintien sous pression du bandage pneumatique. Ses propriétés d'étanchéité lui permettent de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse de la diffusion d'air provenant de l'espace intérieur au bandage.

Cette fonction de couche interne ou "gomme intérieure" (*"inner liner"*) étanche est aujourd'hui remplie par des compositions à base de caoutchouc butyl (copolymère d'isobutylène et d'isoprène), reconnues depuis fort longtemps pour leurs excellentes propriétés d'étanchéité.

Toutefois, un inconvénient bien connu des compositions à base de caoutchouc ou élastomère butyl est qu'elles présentent des pertes hystérétiques importantes, qui plus est sur un spectre large de température, inconvénient qui pénalise la résistance au roulement des bandages pneumatiques.

Diminuer l'hystérèse de ces couches internes d'étanchéité et donc in fine la consommation de carburant des véhicules automobiles, est un objectif général auquel se heurte la technologie actuelle.

Or, les Demanderesses ont découvert lors de leurs recherches un stratifié multicouches spécifique, à base d'élastomères thermoplastiques, qui répond à un tel objectif tout en offrant d'excellentes propriétés d'étanchéité.

Ainsi, selon un premier objet, la présente invention concerne un stratifié élastomère étanche aux gaz de gonflage, susceptible d'adhérer à une composition d'élastomère diénique, ledit stratifié étant caractérisé en ce qu'il comporte au moins deux couches superposées d'élastomère thermoplastique (pce signifiant parties en poids pour cent parties d'élastomère, dans chaque composition élastomère respective) :
o à titre de première couche, étanche, une première composition élastomère comportant plus de 50 pce d'un copolymère à blocs polystyrène et polyisobutylène ;
o à titre de deuxième couche, adhésive, une deuxième composition élastomère comportant plus de 50 pce d'un copolymère thermoplastique styrénique insaturé et optionnellement un agent plastifiant liquide à un taux de 0 à moins de 100 pce.

Comparativement à un caoutchouc butyl, les élastomères styréniques ci-dessus présentent l'avantage majeur, en raison de leur nature thermoplastique, de pouvoir être travaillés tels quels à l'état fondu (liquide), et par conséquent d'offrir une possibilité de mise en oeuvre simplifiée.

L'invention concerne également l'utilisation d'un tel stratifié dans des objets pneumatiques, particulièrement les objets pneumatiques en caoutchouc tels que des bandages pneumatiques, ou les chambres à air, notamment les chambres à air pour bandage pneumatique.

La présente invention concerne particulièrement l'utilisation du stratifié ci-dessus dans des bandages pneumatiques destinés à équiper des véhicules à moteur de type tourisme, SUV ("*Sport Utility Vehicles*"), deux roues (notamment motos), avions, comme des véhicules industriels tels que camionnettes, poids-lourd (c'est-à-dire métro, bus, engins de transport routier tels que camions, tracteurs, remorques, véhicules hors-la-route tels qu'engins agricoles ou de génie civil) et autres véhicules de transport ou de manutention.

L'invention concerne également en soi tout objet pneumatique, en particulier bandage pneumatique, comportant un stratifié multicouches selon l'invention.

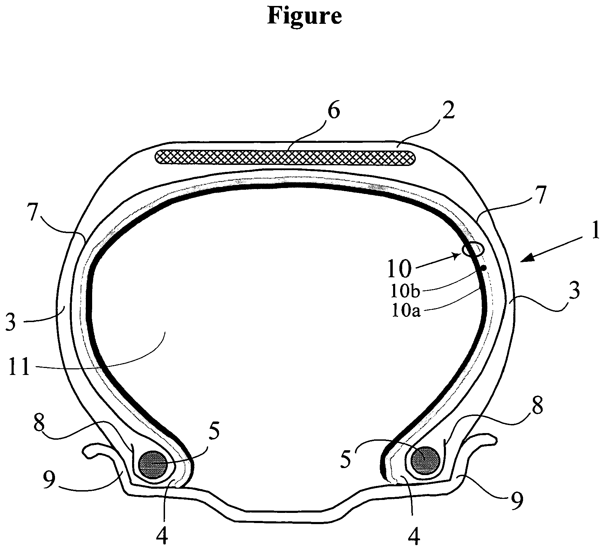

L'invention ainsi que ses avantages seront aisément compris à la lumière de la description et des exemples de réalisation qui suivent, ainsi que de la figure unique relative à ces exemples qui schématise en coupe radiale, un bandage pneumatique à armature de carcasse radiale incorporant un stratifié conforme à l'invention.

### I. DESCRIPTION DETAILLEE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Enfin, l'expression "pce" signifie parties en poids pour cent parties d'élastomère (ou "caoutchouc", les deux termes étant considérés comme synonymes) total, c'est-à-dire du total des élastomères présents dans chaque composition élastomère considérée.

Le stratifié multicouches de l'invention a donc pour caractéristique essentielle de comporter au moins deux couches superposées :
∘ à titre de première couche, étanche, une première composition élastomère comportant plus de 50 pce d'un copolymère à blocs polystyrène et polyisobutylène (dit "premier copolymère thermoplastique styrénique" ou "premier copolymère TPS") ;
∘ à titre de deuxième couche, adhésive, une deuxième composition élastomère comportant plus de 50 pce d'un copolymère thermoplastique styrénique insaturé (dit "deuxième copolymère thermoplastique styrénique" ou "deuxième copolymère TPS") et optionnellement un agent plastifiant liquide à un taux de 0 à moins de 100 pce.

En d'autres termes, le taux de chaque copolymère TPS, dans sa couche respective, est compris dans une domaine de plus de 50 pce à 100 pce. Grâce à sa deuxième couche, adhésive, ce stratifié est susceptible d'adhérer fortement à une composition d'élastomère diénique ; il est particulièrement utilisable dans un objet pneumatique pourvu d'une telle composition d'élastomère diénique destinée à être au contact du stratifié.

On rappellera tout d'abord que les élastomères thermoplastiques styréniques (dénommés aussi élastomères "TPS") sont des élastomères thermoplastiques se présentant sous la forme de copolymères blocs à base de styrène. De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène). Ce sont souvent des élastomères triblocs avec deux segments rigides reliés par un segment souple. Les segments rigides et souples peuvent être disposés linéairement, en étoile ou branchés. Ces élastomères TPS peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

Concernant le deuxième copolymère TPS, on rappellera également que doit être entendu par copolymère TPS insaturé un copolymère TPS qui est pourvu d'insaturations éthyléniques, c'est-à-dire comporte des doubles liaisons carbone-carbone (conjuguées ou non). Par copolymère TPS saturé, on entend un copolymère TPS qui ne comporte aucune insaturation éthylénique (i.e., aucune double liaison carbone-carbone).

### I-1. PREMIERE COUCHE (ETANCHE AUX GAZ)

A titre de première couche, étanche à l'air ou plus généralement tout gaz de gonflage, est utilisée une première composition élastomère comportant plus de 50 pce d'un copolymère à blocs polystyrène et polyisobutylène (ou "premier copolymère TPS").

Par "copolymère à blocs polystyrène et polyisobutylène" doit être entendu dans la présente demande tout copolymère thermoplastique styrénique comportant au moins un bloc polystyrène (c'est-à-dire un ou plusieurs blocs polystyrène) et au moins un bloc polyisobutylène (c'est-à-dire un ou plusieurs blocs polyisobutylène), auxquels peuvent être associés ou non d'autres blocs saturés ou non (par exemple polyéthylène et/ou polypropylène) et/ou d'autres unités monomères.

On a constaté que la présence de ce premier copolymère TPS, notamment SIB ou SIBS, offre au stratifié d'excellentes propriétés d'étanchéité tout en réduisant de manière notable l'hystérèse comparativement à des couches conventionnelles à base de caoutchouc butyl.

Ce copolymère à blocs polystyrène et polyisobutylène est en particulier choisi dans le groupe constitué par les copolymères dibloc styrène/ isobutylène (en abrégé "SIB"), les copolymères tribloc styrène/ isobutylène/ styrène (en abrégé "SIBS") et les mélanges de ces copolymères SBIB et SIBS, par définition totalement saturés.

Des copolymères à blocs polystyrène et polyisobutylène tels que SIB ou SIBS sont connus et disponibles commercialement, vendus par exemple par la société KANEKA sous la dénomination "SIBSTAR" (e.g. "Sibstar 103T", "Sibstar 102T", "Sibstar 073T" ou "Sibstar 072T" pour les SIBS ; "Sibstar 042D" pour les SIB). Ils ont par exemple été décrits, ainsi que leur synthèse, dans les documents brevet EP 731 112, US 4 946 899, US 5 260 383. Ils ont été développés tout d'abord pour des applications biomédicales puis décrits dans diverses applications propres aux élastomères TPE, aussi variées que matériel médical, pièces pour automobile ou pour électroménager, gaines pour fils électriques, pièces d'étanchéité ou élastiques (voir par exemple EP 1 431 343, EP 1 561 783, EP 1 566 405, WO 2005/103146). Toutefois, à la connaissance des Demanderesses, aucune application n'est connue dans le domaine des objets pneumatiques, particulièrement des bandages pneumatiques pour véhicules automobiles.

La couche étanche aux gaz décrite ci-dessus pourrait éventuellement comporter d'autres élastomères que le premier copolymère TPS, dans une quantité minoritaire (inférieure à 50 pce). De tels élastomères complémentaires pourraient être par exemple des élastomères diéniques tels que du caoutchouc naturel ou un polyisoprène synthétique, un caoutchouc butyl voire d'autres élastomères thermoplastiques styréniques saturés, dans la limite de la compatibilité de leurs microstructures. Dans un tel cas et de préférence, le taux de premier copolymère TPS dans la première composition étanche est supérieur à 70 pce, en particulier compris dans un domaine de 80 à 100 pce.

Toutefois, selon un mode de réalisation particulièrement préférentiel, le premier copolymère TPS, en particulier SIB ou SIBS, est le seul élastomère thermoplastique, et plus généralement le seul élastomère présent dans la couche étanche aux gaz ; en conséquence, dans un tel cas, son taux est égal à 100 pce.

Le premier copolymère TPS ci-dessus décrit, en particulier SIB ou SIBS, est suffisant à lui seul pour que soit remplie, dans la première couche élastomère, la fonction d'étanchéité aux gaz vis-à-vis des objets pneumatiques dans lesquels ils sont utilisés.

A ce premier copolymère TPS peut être toutefois associée, à titre d'agent plastifiant, une huile d'extension (ou huile plastifiante) dont la fonction est de faciliter la mise en oeuvre, particulièrement l'intégration dans un objet pneumatique par un abaissement du module et une augmentation du pouvoir tackifiant de la couche étanche aux gaz et donc du stratifié de l'invention.

Cette huile d'extension optionnelle est utilisée préférentiellement à un taux inférieur à 100 pce, soit pour moins de 100 parties en poids pour cent parties d'élastomère total (i.e., premier copolymère TPS ci-dessus plus élastomère complémentaire le cas échéant) présent dans la première couche étanche.

On peut utiliser toute huile d'extension, de préférence à caractère faiblement polaire, apte à étendre, plastifier des élastomères, notamment thermoplastiques.

A température ambiante (23°C), ces huiles, plus ou moins visqueuses, sont des liquides (c'est-à-dire, pour rappel, des substances ayant la capacité de prendre à terme la forme de leur contenant), par opposition notamment à des résines qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales et les mélanges de ces huiles.

On utilise préférentiellement des huiles polybutènes, particulièrement des huiles polyisobutylènes (en abrégé "PIB") qui ont démontré le meilleur compromis de propriétés comparativement aux autres huiles testées, notamment à des huiles du type paraffiniques.

A titre d'exemples, des huiles polyisobutylène sont commercialisées notamment par la société UNIVAR sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12"), par INEOS Oligomer sous la dénomination "Indopol H1200". Des huiles paraffiniques sont commercialisées par exemple par Exxon sous la dénomination "Telura 618" ou par Repsol sous la dénomination "Extensol 51".

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofuranne à une concentration d'environ 1 g/l; puis la solution est filtrée sur filtre de porosité 0,45µm avant injection. L'appareillage est la chaîne chromatographique "WATERS alliance". Le solvant d'élution est le tétrahydrofuranne, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction des conditions particulières d'usage de la couche élastomère étanche aux gaz, notamment de l'objet pneumatique dans lequel elle est destinée à être utilisée.

Si une huile d'extension est utilisée, on préfère que son taux d'extension soit supérieur à 5 pce, en particulier compris entre 5 et 100 pce. En dessous du minimum indiqué, la couche étanche aux gaz et donc le stratifié multicouches risquent de présenter une rigidité trop forte pour certaines applications tandis qu'au-delà du maximum préconisé, on s'expose à un risque de cohésion insuffisante du stratifié et de perte d'étanchéité pouvant être néfaste selon l'application considérée.

Pour ces raisons, en particulier pour une utilisation du stratifié dans un bandage pneumatique, on préfère que le taux d'huile d'extension soit supérieur à 10 pce, notamment compris entre 10 et 90 pce, plus préférentiellement encore qu'il soit supérieur à 20 pce, notamment compris entre 20 et 80 pce.

De préférence, la couche étanche à l'air précédemment décrite a une épaisseur supérieure à 0,05 mm, plus préférentiellement comprise entre 0,1 et 10 mm (par exemple de 0,2 à 2 mm).

On comprendra aisément que, selon les domaines d'application spécifiques, les dimensions et les pressions enjeu, le mode de mise en oeuvre de l'invention peut varier, la première couche étanche à l'air comportant en fait plusieurs gammes préférentielles d'épaisseur. Ainsi, par exemple, pour des bandages pneumatiques de type tourisme, elles peuvent avoir une épaisseur d'au moins 0,3 mm, préférentiellement comprise entre 0,5 et 2 mm. Selon un autre exemple, pour des bandages pneumatiques de véhicules poids lourds ou agricole, l'épaisseur préférentielle peut se situer entre 1 et 3 mm. Selon un autre exemple, pour des bandages pneumatiques de véhicules dans le domaine du génie civil ou pour avions, l'épaisseur préférentielle peut se situer entre 2 et 10 mm.

### I-2. DEUXIEME COUCHE (ADHESIVE)

A titre de deuxième couche adhésive est utilisée, en combinaison avec la première couche étanche aux gaz précédente, une deuxième composition élastomère dont la caractéristique essentielle est de comporter plus de 50 pce (c'est-à-dire de plus de 50 pce à 100 pce) du deuxième copolymère TPS, insaturé.

On a constaté que la présence de cette deuxième couche à base du deuxième copolymère TPS (insaturé), dans le stratifié de l'invention, permet d'améliorer fortement l'adhésion de ce dernier à une composition de caoutchouc diène telle que celles utilisées habituellement dans des objets pneumatiques tels que des bandages pneumatiques. A titre d'exemple, une telle composition de caoutchouc diène est par exemple une composition à base de caoutchouc naturel telle que celles qui sont couramment utilisées pour les armatures de carcasse des bandages pneumatiques, généralement et de manière connue au contact direct de la couche interne d'étanchéité de tels bandages pneumatiques.

Selon un mode de réalisation préférentiel, le deuxième copolymère TPS est un copolymère comportant des blocs styrène et des blocs diène, ces blocs diène étant en particulier des blocs isoprène ou butadiène. Plus préférentiellement, ce deuxième élastomère TPS, insaturé, est choisi dans le groupe constitué par les copolymères blocs styrène/ butadiène (SB), styrène/ isoprène (SI), styrène/ butadiène/ butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

Selon un autre mode de réalisation particulièrement préférentiel de l'invention, le taux de deuxième copolymère TPS est supérieur à 70 pce, plus préférentiellement compris dans un domaine de 80 à 100 pce. Le deuxième copolymère TPS insaturé précédemment décrit peut constituer avantageusement la totalité de la matrice élastomère de la deuxième composition adhésive (présent dans ce cas à un taux de 100 pce).

Des élastomères TPS insaturés tels que par exemple SBS, SIS ou SBBS, sont bien connus et disponibles commercialement, par exemple auprès de la société Kraton sous la dénomination "Kraton D" (e.g., produits D1161, D1118, D1116, D1163 pour des exemples d'élastomères SIS et SBS), auprès de la société Dynasol sous la dénomination "Calprene" (e.g., produits C405, C411, C412 pour des exemples d'élastomères SBS) ou encore auprès de la société Asahi sous la dénomination "Tuftec" (e.g., produit P1500 pour un exemple d'élastomère SBBS).

Outre le deuxième copolymère TPS, la deuxième composition adhésive peut comporter ou non, selon les applications particulières mises en oeuvre, un agent plastifiant liquide (à température ambiante, soit 23°C) dont le rôle est de plastifier le deuxième copolymère TPS insaturé et donner ainsi plus de souplesse à la couche adhésive ainsi qu'au stratifié.

Si un tel agent plastifiant liquide est utilisé, il est présent à un taux compris entre 0 et 100 pce, préférentiellement entre 5 et 50 pce, en particulier dans un domaine de 10 à 40 pce, domaines de valeurs qui représentent un excellent compromis entre facilité de mise en oeuvre de la couche adhésive d'une part, efficacité d'adhésion d'autre part de cette dernière à l'autre couche (étanche aux gaz) du stratifié de l'invention.

Selon un mode de réalisation particulier de l'invention, cet agent plastifiant liquide peut consister en une huile d'extension telle que décrite au paragraphe qui précède, notamment choisie dans le groupe constitué par les huiles polybutène telles que polyisobutylène, les huiles paraffiniques et les mélanges de ces huiles.

Selon un autre mode de réalisation particulier de l'invention, cet agent plastifiant liquide peut consister en un élastomère liquide, c'est-à-dire présentant une faible masse moléculaire, typiquement inférieure à 50 000, préférentiellement inférieure à 30 000 g/mol. Il peut s'agir en particulier d'une élastomère diénique liquide tel que IR, SBR, BR.

L'épaisseur de la couche adhésive, préférentiellement supérieure à 0,01 mm, peut varier dans une large mesure, par exemple entre 0,01 et 0,5 mm, en fonction notamment du mode de dépôt de ladite couche adhésive sur l'autre couche étanche aux gaz du stratifié. Avantageusement, selon un mode de réalisation particulier de l'invention, la couche adhésive est coextrudée avec la couche étanche aux gaz.

Selon un autre mode de réalisation préférentiel de l'invention, le taux pondéral de styrène, dans chaque (premier et deuxième) copolymère TPS, est compris entre 5% et 50%. En dessous du minimum indiqué, le caractère thermoplastique des élastomères risque de diminuer de manière sensible tandis qu'au-dessus du maximum préconisé, l'élasticité du stratifié peut être affectée. Pour ces raisons, le taux de styrène est plus préférentiellement compris entre 10 et 40%, en particulier entre 15 et 35%.

Par styrène, doit être entendu dans la présente description tout monomère à base de styrène, non substitué comme substitué ; parmi les styrènes substitués peuvent être cités par exemple les méthylstyrènes (par exemple α-méthylstyrène, β-méthylstyrène, *p*-méthylstyrène, *tert-*butylstyrène) les chlorostyrènes (par exemple monochlorostyrène, dichlorostyrène).

On préfère que la Tg (température de transition vitreuse, mesurée selon ASTM D3418) de chaque (premier et deuxième) copolymère TPS soit inférieure à -20°C, en particulier inférieure à -40°C. Une valeur de Tg supérieure à ces minima peut diminuer les performances du stratifié lors d'une utilisation à très basse température ; pour une telle utilisation, la Tg des copolymères TPS est plus préférentiellement encore inférieure à -50°C.

La masse moléculaire moyenne en nombre (notée Mn) de chaque (premier et deuxième) élastomère TPS est préférentiellement comprise entre 30 000 et 500 000 g/mol, plus préférentiellement comprise entre 40 000 et 400 000 g/mol. En dessous des minima indiqués, la cohésion entre les chaînes d'élastomères, notamment en raison de leur dilution éventuelle par une huile d'extension ou autre plastifiant liquide, risque d'être affectée. Par ailleurs, une masse Mn trop élevée peut être pénalisante pour la souplesse des deux couches. Ainsi, on a constaté qu'une valeur comprise dans un domaine de 50 000 à 300 000 g/mol était particulièrement bien adaptée, notamment à une utilisation du stratifié multicouches dans un bandage pneumatique.

La masse moléculaire moyenne en nombre (Mn) des élastomères TPS est déterminée de manière connue, par chromatographie d'exclusion stérique (SEC). L'échantillon est préalablement solubilisé dans du tétrahydrofuranne à une concentration d'environ 1 g/l; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'indice de polydispersité Ip (rappel : Ip = Mw/Mn avec Mw masse moléculaire moyenne en poids) des élastomères TPS est de préférence inférieur à 3 ; plus préférentiellement Ip est inférieur à 2.

### I-3. CHARGE LAMELLAIRE

L'utilisation de charge lamellaire, à un taux volumique préférentiellement supérieur à 5%, en particulier compris entre 5% et 50%, peut avantageusement permettre de réduire encore le coefficient de perméabilité (donc d'augmenter l'étanchéité) de la première composition élastomère, sans augmenter de façon excessive son module, ce qui permet de conserver la facilité d'intégration de la couche étanche dans l'objet pneumatique.

Les charges dites lamellaires (en anglais "*platy fillers*") sont bien connues de l'homme du métier. Elles ont été utilisées notamment dans des bandages pneumatiques pour réduire la perméabilité des couches étanches aux gaz conventionnelles à base de caoutchouc butyl. Dans ces couches à base de butyl, elles sont généralement utilisées à des taux relativement faibles, n'excédant pas le plus souvent 10 à 15 pce (voir par exemple les documents brevet US 2004/0194863, WO 2006/047509).

Elles se présentent généralement sous forme de plaques, plaquettes, feuilles ou feuillets empilés, avec une anisométrie plus ou moins marquée. Leur rapport de forme (F = L/E) est généralement supérieur à 3, plus souvent supérieur à 5 ou à 10, L représentant la longueur (ou plus grande dimension) et E l'épaisseur moyenne de ces charges lamellaires, ces moyennes étant calculées en nombre. Des rapports de forme atteignant plusieurs dizaines voire centaines sont fréquents. Leur longueur moyenne est de préférence supérieure à 1 µm (c'est-à-dire qu'il s'agit alors de charges lamellaires dites micrométriques), typiquement comprise entre quelques µm (par exemple 5 µm) et quelques centaines de µm (par exemple 500 voire 800 µm).

Préférentiellement, les charges lamellaires utilisées conformément à l'invention sont choisies dans le groupe constitué par les graphites, les phyllosilicates et les mélanges de telles charges. Parmi les phyllosilicates, on citera notamment les argiles, talcs, micas, kaolins, ces phyllosilicates pouvant être modifiés ou non par exemple par un traitement de surface ; à titre d'exemples de tels phyllosilicates modifiés, on peut citer notamment des micas recouverts d'oxyde de titane, des argiles modifiées par des tensioactifs ("*organo clays*").

On utilise préférentiellement des charges lamellaires à faible énergie de surface, c'est-à-dire relativement apolaires, telles que celles choisies dans le groupe constitué par les graphites, les talcs, les micas et les mélanges de telles charges, ces dernières pouvant être modifiées ou non, plus préférentiellement encore dans le groupe constitué par les graphites, les talcs et les mélanges de telles charges. Parmi les graphites peuvent être cités notamment les graphites naturels, les graphites expansés ou les graphites synthétiques.

Comme exemples de micas, on peut citer les micas commercialisés par la société CMMP (Mica-MU®, Mica-Soft®, Briomica® par exemple), les vermiculites (notamment la vermiculite Shawatec® commercialisée par CMMP ou la vermiculite Microlite® commercialisée par W.R. Grace), les micas modifiés ou traités (par exemple, la gamme Iriodin® commercialisée par Merck). Comme exemples de graphites, on peut citer les graphites commercialisés par la société Timcal (gamme Timrex®). Comme exemple de talcs, on peut citer les talcs commercialisés par la société Luzenac.

Les charges lamellaires décrites ci-dessus sont préférentiellement utilisées à un taux élevé, supérieur à 5%, plus préférentiellement au moins égal à 10% en volume de première composition élastomère. Un tel taux volumique correspond typiquement, compte tenu de la densité moyenne des charges lamellaires utilisées (typiquement entre 2,0 et 3,0) et de celle des élastomères TPS utilisés, à un taux pondéral préférentiellement supérieur à 20 pce, plus préférentiellement au moins égal à 40 pce.

Pour augmenter encore l'étanchéité de la première couche d'élastomère TPS, on peut utiliser un taux de charge lamellaire encore supérieur, au moins égal à 15% voire 20% en volume, ce qui correspond typiquement à des taux pondéraux au moins égaux à 50 pce voire 80 pce. Des taux pondéraux supérieurs à 100 pce sont même avantageusement possibles.

Le taux de charge lamellaire est toutefois préférentiellement inférieur à 50% en volume (typiquement inférieur à 500 pce), limite supérieure à partir de laquelle on peut être exposé à des problèmes d'augmentation du module, de fragilisation de la composition, difficultés de dispersion de la charge et de mise en oeuvre, sans parler d'une pénalisation possible de l'hystérèse.

L'introduction des charges lamellaires dans la première composition thermoplastique élastomère pourra être réalisée selon divers procédés connus, par exemple par mélangeage en solution, par mélangeage en masse dans un mélangeur interne, ou encore par mélangeage par extrusion.

### I-4. ADDITIFS DIVERS

La stratifié de l'invention peut comporter divers additifs, notamment ceux usuellement présents dans les couches étanches à l'air et/ou les couches adhésives connues de l'homme du métier, par exemple des charges renforçantes telles que du noir de carbone ou de la silice, des charges non renforçantes ou inertes, des plastifiants autres que ceux précités, des agents de protection tels que antioxydants ou antiozonants, anti-UV, des agents colorants avantageusement utilisables pour la coloration des compositions, divers agents de mise en oeuvre ou autres stabilisants, ou encore des promoteurs aptes à favoriser encore l'adhésion du stratifié au reste de la structure d'un objet pneumatique par exemple.

Outre les copolymères TPS précédemment décrits, le stratifié multicouches de l'invention pourrait aussi comporter, toujours selon une fraction pondérale minoritaire par rapport aux premier et deuxième élastomères TPS, des polymères autres que des élastomères, tels que par exemple des polymères thermoplastiques compatibles avec ces élastomère TPS.

Le stratifié multicouches précédemment décrit est un composé solide (à 23°C) et élastique, qui se caractérise notamment, grâce à sa formulation spécifique, par une très haute souplesse et très haute déformabilité. En particulier, selon un mode de réalisation préférentiel de l'invention, chacune des deux couches du stratifié présente un module sécant en extension, à 10% d'allongement, qui est inférieur à 2 MPa, plus préférentiellement inférieur à 1,5 MPa (notamment inférieur à 1 MPa) ; cette grandeur est mesurée en première élongation (c'est-à-dire sans cycle d'accommodation) à une température de 23°C, avec une vitesse de traction de 500 mm/min (norme ASTM D412), et rapportée à la section initiale de l'éprouvette.

### I-5. UTILISATION DU STRATIFIE DANS UN OBJET PNEUMATIQUE

Le stratifié de l'invention peut être utilisé dans tout type d'objet "pneumatique", c'est-à-dire, par définition, tout objet qui prend sa forme utilisable quand on le gonfle d'air. A titre d'exemples de tels objets pneumatiques, on peut citer les bateaux pneumatiques, les ballons ou balles utilisées pour le jeu ou le sport.

Il est particulièrement bien adapté à une utilisation dans un objet pneumatique, produit fini ou semi-fini, en caoutchouc, tout particulièrement dans un bandage pneumatique pour véhicule automobile tel qu'un véhicule de type deux roues, tourisme ou industriel, ou non automobile tel que vélo.

Un tel stratifié est préférentiellement disposé sur la paroi interne de l'objet pneumatique, le recouvrant totalement ou au moins en partie, mais il peut être également intégré complètement à sa structure interne.

Préférentiellement, le stratifié multicouches de l'invention a une épaisseur totale qui est supérieure à 0,05 mm, en particulier comprise entre 0,1 et 15 mm, plus préférentiellement entre 0,5 et 10 mm.

Comparativement à une couche d'étanchéité usuelle à base de caoutchouc butyl, le stratifié multicouche de l'invention a l'avantage de présenter une hystérèse nettement plus faible, et donc d'offrir une résistance au roulement réduite aux bandages pneumatiques, comme cela est démontré dans les exemples de réalisation qui suivent.

### II. EXEMPLES DE REALISATION DE L'INVENTION

Le stratifié multicouche de l'invention est avantageusement utilisable dans les bandages pneumatiques de tous types de véhicules, en particulier dans les bandages pour véhicules tourisme susceptibles de rouler à très haute vitesse ou les bandages pour véhicules industriels tels que poids-lourd.

A titre d'exemple, la figure unique annexée représente de manière très schématique (sans respect d'une échelle spécifique), une coupe radiale d'un bandage pneumatique conforme à l'invention destiné à un véhicule du type tourisme.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Le bandage pneumatique 1 est caractérisé en ce que sa paroi interne comporte un stratifié multicouche (10) comportant au moins deux couches (10a, 10b), étanche à l'air grâce à sa première couche (10a) disposée du côté de la cavité interne 11, et hautement adhésif au reste de la structure du pneumatique (par exemple son armature de carcasse) grâce à sa seconde couche (10b) radialement plus externe. Conformément à un mode de réalisation préférentiel de l'invention, les deux couches (10a, 10b) couvrent substantiellement toute la paroi interne du bandage pneumatique, se prolongeant d'un flanc à l'autre, au moins jusqu'au niveau du crochet de jante lorsque le bandage pneumatique est en position montée.

Dans cet exemple, la couche 10a (d'épaisseur 0,75 mm environ) comporte un élastomère SIBS ("Sibstar 102T" avec un taux de styrène d'environ 15%, une Tg d'environ - 65°C et une masse moléculaire moyenne Mn d'environ 90 000 g/mol), 28 pce (soit 5% en volume de la première couche) d'une charge lamellaire ("Mica-Soft 15") et une huile d'extension polyisobutylène ("Indopol H1200") à un taux pondéral d'environ 65 pce.

La couche 10a a été préparée comme suit. Le mélange des trois constituants (SIBS, charge lamellaire et huile) a été réalisé de manière conventionnelle, à l'aide d'une extrudeuse bi-vis (L/D = 40), à une température typiquement supérieure à la température de fusion de la composition (environ 190°C). L'extrudeuse utilisée comportait une première alimentation (trémie) pour le SIBS, une deuxième alimentation (trémie) pour la charge lamellaire et enfin une pompe d'injection liquide sous pression pour l'huile d'extension polyisobutylène ; elle était pourvue d'une filière permettant d'extruder le produit aux dimensions souhaitées.

La deuxième couche adhésive 10b était quant à elle constituée d'un seul élastomère insaturé SIS ("Kraton D1161" avec un taux de styrène d'environ 15% et une Tg d'environ - 60°C), sans autre additif. Les deux couches 10a et 10b ont été finalement coextrudées à une température de 220°C, pour obtention finale du stratifié multicouche de l'invention, avant incorporation de ce dernier au bandage pneumatique.

Le pneumatique pourvu de son stratifié multicouches (10) tel que décrit ci-dessus peut être réalisé avant ou après vulcanisation (ou cuisson).

Dans le premier cas (i.e., avant cuisson du bandage pneumatique), le stratifié bicouche est simplement appliqué en une fois, de façon conventionnelle, à l'endroit souhaité ; la vulcanisation est ensuite effectuée classiquement. Une variante de fabrication possible, pour l'homme du métier des bandages pneumatiques, consistera par exemple au cours d'une première étape, à déposer à plat la couche étanche à l'air (10a) directement sur un tambour de confection puis la couche adhésive (10b), sous la forme de deux couches d'épaisseur adaptée, avant de recouvrir le stratifié ainsi formé avec le reste de la structure du bandage pneumatique à l'état cru, selon des techniques de fabrication bien connues de l'homme du métier.

Dans le second cas (i.e., après cuisson du bandage pneumatique), le stratifié multicouches, comportant par exemple son propre système de vulcanisation, est appliqué à l'intérieur du bandage pneumatique cuit par tout moyen approprié, par exemple par collage.

Dans les exemples qui suivent, les propriétés d'étanchéité ont tout d'abord été analysées sur des éprouvettes de compositions à base de caoutchouc butyl d'une part, de stratifié selon l'invention d'autre part (avec et sans huile d'extension PIB, pour ce qui concerne la première couche étanche à base de SIBS).

Pour cette analyse, on a utilisé un perméamètre à parois rigides, placé dans une étuve (température de 60°C dans le cas présent), muni d'un capteur de pression (étalonné dans le domaine de 0 à 6 bars) et relié à un tube équipé d'une valve de gonflage. Le perméamètre peut recevoir des éprouvettes standard sous forme de disque (par exemple de diamètre 65 mm dans le cas présent) et d'épaisseur uniforme pouvant aller jusqu'à 3 mm (0,5 mm dans le cas présent). Le capteur de pression est connecté à une carte d'acquisition de données *National Instruments* (acquisition quatre voies analogiques 0-10 V) qui est reliée à un ordinateur réalisant une acquisition en continu avec une fréquence de 0,5 Hz (1 point toutes les deux secondes). Le coefficient de perméabilité (K) est mesuré à partir de la droite de régression linéaire (moyenne sur 1000 points) donnant la pente α de la perte de pression, à travers l'éprouvette testée, en fonction du temps, après stabilisation du système, c'est-à-dire obtention d'un régime stable au cours duquel la pression décroît linéairement en fonction du temps.

Tout d'abord, on a noté que le stratifié dont la couche étanche comportait uniquement l'élastomère SIBS (c'est-à-dire sans huile d'extension ni autre additif) présentait un coefficient de perméabilité très bas, sensiblement égal à celui de la composition usuelle à base de caoutchouc butyl. Ceci constitue déjà un résultat remarquable pour un tel stratifié. Comme déjà indiqué, si l'on accepte en contrepartie une certaine perte d'étanchéité, l'ajout d'une huile d'extension dans la première couche étanche aux gaz permet avantageusement de faciliter l'intégration du stratifié multicouche dans l'objet pneumatique, par un abaissement du module et une augmentation du pouvoir tackifiant de ce dernier.

Ainsi, en utilisant 65 pce d'huile d'extension dans la première couche étanche, on a constaté que le coefficient de perméabilité était augmenté (et donc l'étanchéité réduite) d'un facteur 2,5 environ en présence d'une huile conventionnelle telle que paraffinique, alors que ce coefficient n'était augmenté que d'un facteur 1,5 en présence d'une huile PIB ("Indopol H1200"), facteur d'augmentation finalement peu pénalisant pour une utilisation dans un bandage pneumatique ; c'est en cela que la combinaison du premier copolymère TPS et d'huile polybutène telle que PIB s'est révélée offrir le meilleur compromis de propriétés d'étanchéité pour le stratifié multicouches de l'invention. D'autre part, en ajoutant une charge lamellaire comme indiqué précédemment (28 pce dans cet exemple), on a pu avantageusement compenser la perte d'étanchéité due à l'ajout de l'huile d'extension.

D'autre part, des tests d'adhésion (tests de pelage) ont été conduits pour tester l'aptitude du stratifié à adhérer après cuisson à une couche d'élastomère diénique, plus précisément à une composition de caoutchouc usuelle pour armature de carcasse de bandage pneumatique, à base de caoutchouc naturel (peptisé) et de noir de carbone N330 (65 parties pour cent parties de caoutchouc naturel), comportant en outre les additifs usuels (soufre, accélérateur, ZnO, acide stéarique, antioxydant, naphténate de cobalt).

On a constaté que l'utilisation de la deuxième couche adhésive (élastomère SIS) permettait d'améliorer fortement, d'un facteur supérieur à trois, voire plus dans de nombreux cas, les forces d'adhésion entre la première couche étanche aux gaz et la composition de caoutchouc naturel.

A la suite des tests de laboratoire ci-dessus, des bandages pneumatiques conformes à l'invention, du type pour véhicule tourisme (dimension 195/65 R15), ont été fabriqués ; leur paroi interne a été recouverte par un stratifié (10a, 10b) d'une épaisseur totale de 1,05 mm (sur tambour de confection, avant fabrication du reste du pneumatique), puis les pneumatiques ont été vulcanisés.

Ledit stratifié était formé d'une première couche étanche à base du SIBS (100 pce) et de la charge lamellaire, le tout étant étendu avec 65 pce d'huile PIB, et d'une deuxième couche adhésive superposée, constituée du seul élastomère SIS (100 pce), telles que décrites supra.

Ces bandages pneumatiques conformes à l'invention ont été comparés à des bandages témoins (marque Michelin "Energy 3") comportant une couche étanche à l'air conventionnelle, de même épaisseur, à base de caoutchouc butyl. La résistance au roulement des bandages pneumatiques a été mesurée sur un volant, selon la méthode ISO 87-67 (1992).

On a constaté que les bandages pneumatiques de l'invention présentaient une résistance au roulement réduite de manière très significative et inattendue pour l'homme du métier, de près de 4% par rapport aux bandages pneumatiques témoins.

En conclusion, le stratifié multicouches de l'invention possède de très bonne propriétés d'étanchéité et une hystérèse réduite comparativement à des couches à base de caoutchouc butyl, ainsi qu'une adhérence particulièrement élevée à une troisième couche d'élastomère diénique tel que caoutchouc naturel. L'invention offre ainsi aux concepteurs de bandages pneumatiques l'opportunité de réduire la consommation de carburant des véhicules automobiles équipés de tels bandages.

## Revendications

1. Stratifié élastomère étanche aux gaz de gonflage, ledit stratifié comportant au moins deux couches superposées d'élastomère thermoplastique styrénique :
∘ à titre de première couche, étanche, une première composition élastomère comportant plus de 50 pce d'un copolymère à blocs polystyrène et polyisobutylène (dit "premier copolymère TPS") ;
∘ à titre de deuxième couche, adhésive, une deuxième composition élastomère comportant plus de 50 pce d'un copolymère thermoplastique styrénique insaturé (dit "deuxième copolymère TPS") et optionnellement un agent plastifiant liquide à un taux de 0 à moins de 100 pce.

2. Stratifié selon la revendication 1, dans lequel le premier copolymère TPS est choisi dans le groupe constitué par les copolymères styrène/ isobutylène, les copolymères styrène/ isobutylène/ styrène et les mélanges de ces copolymères un copolymère styrène/ isobutylène/ styrène (en abrégé "SIBS"), de préférence un copolymère styrène/ isobutylène/ styrène.

3. Stratifié selon l'une quelconque des revendications 1 à 2, dans lequel le deuxième copolymère TPS est un copolymère comportant des blocs styrène et des blocs diène, les blocs diène étant de préférence des blocs isoprène ou butadiène.

4. Stratifié selon la revendication 3, dans lequel le deuxième copolymère TPS est choisi dans le groupe constitué par les copolymères blocs styrène/ butadiène (SB), styrène/ isoprène (SI), styrène/ butadiène/ butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

5. Stratifié selon l'une quelconque des revendications 1 à 4, dans lequel le taux de premier copolymère TPS dans la première composition est supérieur à 70 pce.

6. Stratifié selon l'une quelconque des revendications 1 à 5, dans lequel le taux de deuxième copolymère TPS dans la deuxième composition est supérieur à 70 pce.

7. Stratifié selon l'une quelconque des revendications 1 à 6, dans lequel la première couche comporte une huile d'extension, de préférence choisie dans le groupe constitué par les huiles polyoléfiniques, les huiles paraffiniques, les huiles naphténiques, les huiles aromatiques, les huiles minérales, et les mélanges de ces huiles.

8. Stratifié selon la revendication 7, dans lequel l'huile d'extension est une huile polybutène, de préférence une huile polyisobutylène.

9. Stratifié selon l'une quelconque des revendications 7 ou 8, dans lequel la masse moléculaire moyenne en nombre de l'huile d'extension est comprise entre 200 et 25 000 g/mol.

10. Stratifié selon l'une quelconque des revendications 7 à 9, dans lequel le taux d'huile d'extension est supérieur à 5 pce, de préférence compris entre 5 et 100 pce.

11. Stratifié selon l'une quelconque des revendications 1 à 10, dans lequel le taux d'agent plastifiant liquide dans la deuxième composition est compris entre 5 et 50 pce.

12. Stratifié selon l'une quelconque des revendications 1 à 11, dans lequel l'agent plastifiant liquide de la deuxième composition est une huile telle que définie dans l'une quelconque des revendications 8 ou 9 ou un élastomère liquide.

13. Stratifié selon l'une quelconque des revendications 1 à 12, dans lequel la première couche comporte une charge lamellaire.

14. Objet pneumatique comportant un stratifié selon l'une quelconque des revendications 1 à 13.

15. Objet pneumatique selon la revendication 14, **caractérisé en ce que** ledit objet pneumatique est un bandage pneumatique ou une chambre à air.

## Patentansprüche

1. Aufpumpgasdichtes Elastomerlaminat, wobei das Laminat mindestens zwei übereinanderliegende Schichten aus thermoplastischem Styrolelastomer umfasst:
∘ als erste dichte Schicht eine erste Elastomerzusammensetzung, die mehr als 50 phe eines Copolymers mit Polystyrol- und Polyisobutylen-Blöcken (das als "erstes TPS-Copolymer" bezeichnet wird) umfasst;
∘ als zweite adhäsive Schicht eine zweite Elastomerzusammensetzung, die mehr als 50 phe eines ungesättigten thermoplastischen Styrol-Copolymers (das als "zweites TPS-Copolymer" bezeichnet wird) und gegebenenfalls einen flüssigen Weichmacher in einem Gehalt von 0 bis weniger als 100 phe umfasst.

2. Laminat nach Anspruch 1, wobei das erste TPS-Copolymer aus der Gruppe bestehend aus Styrol/Isobutylen-Copolymeren, Styrol/Isobutylen/Styrol-Copolymeren und Mischungen dieser Copolymere einem Styrol/Isobutylen/Styrol-Copolymer (abgekürzt "SIBS"-Copolymer), vorzugsweise einem Styrol/Isobutylen/Styrol-Copolymer, ausgewählt ist.

3. Laminat nach einem der Ansprüche 1 bis 2, wobei es sich bei dem zweiten TPS-Copolymer um ein Copolymer mit Styrolblöcken und Dienblöcken handelt, wobei es sich bei den Dienblöcken vorzugsweise um Isopren- oder Butadienblöcke handelt.

4. Laminat nach Anspruch 3, wobei das zweite TPS-Copolymer aus der Gruppe bestehend aus Styrol/Butadien(SB)-, Styrol/Isopren(SI)-, Styrol/Butadien/Butylen(SBB)-, Styrol/Butadien/Isopren(SBI)-, Styrol/Butadien/Styrol(SBS)-, Styrol/Butadien/Butylen/Styrol(SBBS)-, Styrol/Isopren/Styrol(SIS)-, Styrol/Buta-dien/Isopren/Styrol(SBIS)-Blockcopolymeren und Mischungen dieser Copolymere ausgewählt ist.

5. Laminat nach einem der Ansprüche 1 bis 4, wobei der Gehalt des ersten TPS-Copolymers in der ersten Zusammensetzung mehr als 70 phe beträgt.

6. Laminat nach einem der Ansprüche 1 bis 5, wobei der Gehalt des zweiten TPS-Copolymers in der zweiten Zusammensetzung mehr als 70 phe beträgt.

7. Laminat nach einem der Ansprüche 1 bis 6, wobei die erste Schicht ein Strecköl umfasst, das vorzugsweise aus der Gruppe bestehend aus Polyolefinölen, Paraffinölen, naphthenischen Ölen, aromatischen Ölen, Mineralölen und Mischungen dieser Öle ausgewählt ist.

8. Laminat nach Anspruch 7, wobei es sich bei dem Strecköl um ein Polybutenyöl, vorzugsweise ein Polyisobutylenöl, handelt.

9. Laminat nach einem der Ansprüche 7 oder 8, wobei das zahlenmittlere Molekulargewicht des Strecköls zwischen 200 und 25.000 g/mol liegt.

10. Laminat nach einem der Ansprüche 7 bis 9, wobei der Streckölgehalt mehr als 5 phe beträgt und vorzugsweise zwischen 5 und 100 phe liegt.

11. Laminat nach einem der Ansprüche 1 bis 10, wobei der Gehalt an flüssigem Weichmacher in der zweiten Zusammensetzung zwischen 5 und 50 phe liegt.

12. Laminat nach einem der Ansprüche 1 bis 11, wobei es sich bei dem flüssigen Weichmacher der zweiten Zusammensetzung um ein wie in einem der Ansprüche 8 oder 9 definiertes Öl oder ein flüssiges Elastomer handelt.

13. Laminat nach einem der Ansprüche 1 bis 12, wobei die erste Schicht einen plättchenförmigen Füllstoff umfasst.

14. Pneumatisches Objekt, umfassend ein Laminat nach einem der Ansprüche 1 bis 13.

15. Pneumatisches Objekt nach Anspruch 14, **dadurch gekennzeichnet, dass** es sich bei dem pneumatischen Objekt um einen Luftreifen oder einen Luftschlauch handelt.

## Claims

1. Elastomer laminate that is impermeable to inflation gases, said laminate comprising at least two superposed thermoplastic styrene elastomer layers:
∘ as an airtight first layer, a first elastomer composition comprising more than 50 phr of a copolymer containing polystyrene and polyisobutylene blocks (referred to as "first TPS copolymer");
∘ as an adhesive second layer, a second elastomer composition comprising more than 50 phr of an unsaturated thermoplastic styrene copolymer (referred to as "second TPS copolymer") and optionally a liquid plasticizing agent at a content from 0 to less than 100 phr.

2. Laminate according to Claim 1, in which the first TPS copolymer is selected from the group consisting of styrene/isobutylene copolymers, styrene/isobutylene/styrene copolymers and blends of these copolymers a styrene/isobutylene/styrene (abbreviated to "SIBS") copolymer, preferably a styrene/isobutylene/styrene copolymer.

3. Laminate according to either one of Claims 1 and 2, in which the second TPS copolymer is a copolymer comprising styrene blocks and diene blocks, the diene blocks preferably being isoprene or butadiene blocks.

4. Laminate according to Claim 3, in which the second TPS copolymer is selected from the group consisting of styrene/butadiene (SB), styrene/isoprene (SI), styrene/butadiene/butylene (SBB), styrene/butadiene/isoprene (SBI), styrene/butadiene/styrene (SBS), styrene/butadiene/ butylene/styrene (SBBS), styrene/isoprene/styrene (SIS) and styrene/butadiene/isoprene/ styrene (SBIS) block copolymers and blends of these copolymers.

5. Laminate according to any one of Claims 1 to 4, in which the content of first TPS copolymer in the first composition is greater than 70 phr.

6. Laminate according to any one of Claims 1 to 5, in which the content of second TPS copolymer in the second composition is greater than 70 phr.

7. Laminate according to any one of Claims 1 to 6, in which the first layer comprises an extender oil, preferably selected from the group consisting of polyolefin oils, paraffinic oils, naphthenic oils, aromatic oils, mineral oils and mixtures of these oils.

8. Laminate according to Claim 7, in which the extender oil is a polybutene oil, preferably a polyisobutylene oil.

9. Laminate according to either one of Claims 7 and 8, in which the number-average molecular weight of the extender oil is between 200 and 25 000 g/mol.

10. Laminate according to any one of Claims 7 to 9, in which the content of extender oil is greater than 5 phr, preferably between 5 and 100 phr.

11. Laminate according to any one of Claims 1 to 10, in which the content of liquid plasticizing agent in the second composition is between 5 and 50 phr.

12. Laminate according to any one of Claims 1 to 11, in which the liquid plasticizing agent of the second composition is an oil as defined in any one of Claims 8 or 9 or a liquid elastomer.

13. Laminate according to any one of Claims 1 to 12, in which the first layer comprises a platy filler.

14. Inflatable article comprising a laminate according to any one of Claims 1 to 13.

15. Inflatable article according to Claim 14, **characterized in that** said inflatable article is a pneumatic tyre or an inner tube.
